# FASCICULE DE BREVET EUROPEEN

(11) **EP 1 737 315 B1**
(45) Date de publication et mention de la délivrance du brevet: **09.11.2016**
(21) Numéro de dépôt: 05753597.3
(22) Date de dépôt: 05.04.2005
(51) Int. Cl.: A47F 1/03

(54) **DISPOSITIF DE DISTRIBUTION DE PRODUITS A OBTURATEUR ROTATIF**
MATERIALAUSGABEVORRICHTUNG MIT DREHVERSCHLUSS
MATERIAL DISPENSING DEVICE WITH A ROTARY SEAL

(30) Priorité: 06.04.2004 FR 0403575
(43) Date de publication de la demande: 03.01.2007
(73) Titulaire: ERCA, 91940 Les Ulis (FR)
(72) Inventeur: SCHWAB, Dominique, F-78000 Versailles (FR); GUYOT, Gilles, F-91470 Limours (FR)
(74) Mandataire: Intès, Didier Gérard André
(86) Numéro de dépôt international: PCT/FR2005/000826
(87) Numéro de publication internationale: WO 2005/100188

(56) Documents cités:
- DE-U- 8 631 806
- GB-A- 2 305 423
- US-A- 3 439 841
- US-A- 5 647 513

## Description

La présente invention concerne un dispositif de distribution de produits, en particulier de produits alimentaires, comprenant un obturateur rotatif, qui présente un premier canal ayant une entrée et une sortie et qui est apte à être déplacé en rotation par rapport à un élément d'obturation pour placer la sortie du premier canal en regard d'un perçage de distribution ou en regard d'une zone de masquage de l'élément d'obturation.

En particulier, l'obturateur rotatif est du type dit "obturateur à glace", pour lequel la sortie du canal est située dans une face d'extrémité plane de l'obturateur, perpendiculaire à son axe de rotation, et dans lequel l'élément d'obturation est formé par une plaque fixe sur laquelle cette extrémité plane glisse lors de la rotation de l'obturateur.

Le dispositif auquel se rapporte l'invention sert par exemple à distribuer des produits alimentaires dans des récipients fabriqués et/ou transportés dans une installation de conditionnement.

De telles installations sont souvent équipées d'un ou plusieurs doseurs comprenant un dispositif de distribution de produits et il est intéressant de pouvoir varier le type de produits distribués pour, à partir d'une même installation, conditionner des produits différents.

Avec les dispositifs de distribution classiques du type précité, il est nécessaire de disposer pour une même installation de plusieurs dispositifs de distribution adaptés, chacun, à la distribution d'un produit spécifique.

Un dispositif de distribution de produits tel que décrit dans le préambule de la revendication 1 est divulgué dans le document US 3 439 841 A.

La présente invention vise à améliorer les dispositifs de l'art antérieur en proposant un dispositif de distribution ayant une flexibilité d'utilisation plus grande, et permettant en particulier de changer plus facilement le produit distribué.

Ce but est atteint grâce au fait que l'obturateur rotatif présente un deuxième canal, distinct du premier canal et ayant une entrée et une sortie, au fait que les sorties des premier et deuxième canaux sont ménagées dans la même face de l'obturateur rotatif et espacées l'une de l'autre de telle sorte que l'obturateur rotatif est apte à occuper une position de repos dans laquelle les sorties des deux canaux sont en regard de la zone de masquage, une première position de distribution dans laquelle la sortie du premier canal est en regard du perçage de distribution tandis que la sortie du deuxième canal est en regard de la zone de masquage et une deuxième position de distribution dans laquelle la sortie du deuxième canal est en regard du perçage de distribution tandis que la sortie du premier canal est en regard de la zone de masquage, les entrées desdits canaux étant aptes à être alimentées en produits à distribuer dans les première et deuxième positions de distribution, et au fait que, à partir de sa position de repos, l'obturateur rotatif est apte à être commandé dans deux sens de rotation opposés pour adopter la première ou la deuxième position de distribution, tandis que, à partir de l'une des positions de distribution, l'obturateur rotatif est apte à être commandé seulement dans le sens de sa rotation vers sa position de repos.

On comprend que le dispositif de l'invention peut, dans un premier temps, être utilisé pour distribuer un premier produit à l'aide du premier canal. Pour cela, l'obturateur rotatif est commandé de manière à passer alternativement de sa position de repos à sa première position de distribution. Pour distribuer un deuxième produit par le deuxième canal, l'obturateur est cette fois commandé de manière à passer alternativement de sa position de repos à sa deuxième position de distribution. Dans le respect des conditions d'hygiène, le dispositif de l'invention peut n'être nettoyé qu'à des intervalles beaucoup plus éloignés que dans l'art antérieur, tout en distribuant alternativement deux produits. Par exemple, lors du changement de produit, il suffit d'éliminer le produit restant dans le canal précédemment utilisé, par exemple par un rinçage rapide de ce canal, avant de distribuer l'autre produit par l'autre canal.

Si le dispositif comporte une seule voie d'entrée à laquelle peuvent être raccordées les entrées des deux canaux, il convient, pour changer le produit, de relier cette voie d'entrée à une nouvelle alimentation en produit et de purger la voie d'entrée en distribuant "à vide" l'ancien produit qu'elle contenait et en procédant au rinçage précité par la voie d'entrée.

Le dispositif peut cependant avoir deux voies d'entrées distinctes, chacune destinée à être reliée à l'entrée de l'un des canaux.

A partir de sa position de repos, l'obturateur est commandé dans l'une de ses positions de distribution par une rotation. Pour revenir dans sa position de repos, il est ensuite commandé en sens contraire, de sorte qu'il passe directement de la position de distribution qu'il occupait à sa position de repos, sans passer par l'autre position de distribution. On évite ainsi, lors du retour de l'obturateur à sa position de repos, que le produit en cours de distribution par l'un des canaux ne s'introduise dans l'autre canal et ne stagne dans cet autre canal. En effet, un produit stagnant et perdant sa fraîcheur dans cet autre canal pourrait nuire à la qualité du produit distribué.

Avantageusement, les première et deuxième positions de distribution sont symétriques l'une de l'autre, de part et d'autre de la position de repos.

Ceci facilite la commande de l'obturateur rotatif qui, lors d'une rotation, couvre toujours un même secteur angulaire.

Avantageusement, les premier et deuxième canaux sont adaptés à la distribution de produits présentant des caractéristiques différentes (par exemple du point de vue de leur viscosité ou de la granulométrie des morceaux qu'ils contiennent éventuellement) et, de préférence, ils présentent des sections de passage de produit à distribuer différentes. En particulier, la sortie du deuxième canal comprend avantageusement une pluralité d'ouvertures de sortie réparties en faisceau.

Cette caractéristique avantageuse permet d'adapter le dispositif de l'invention à la distribution de produits présentant des caractéristiques différentes. Ainsi, un même dispositif peut distribuer des produits ayant des caractéristiques différentes alors que, dans l'art antérieur, deux distributeurs spécifiques auraient été nécessaires. Par exemple, le premier canal peut présenter une section importante et être adapté à la distribution de produits présentant une viscosité élevée ou de produits comprenant des morceaux. Le deuxième canal peut présenter une section de passage de produit plus faible, et être adapté à la distribution de produits liquides ou pâteux ayant une faible viscosité. Lorsque la sortie du deuxième canal présente une pluralité d'ouvertures de sortie, la section de passage de ce deuxième canal est définie par la section de passage de la plus petite sortie. Le fait de répartir les sorties en faisceau permet une distribution homogène d'un produit de faible viscosité, par exemple un nappage à base de coulis ou de caramel. Ce faisceau peut être légèrement divergent de manière à bien répartir le produit.

Avantageusement, l'obturateur est apte à occuper, en outre, une position de nettoyage, dans laquelle les entrées des canaux communiquent simultanément avec une entrée pour un fluide de nettoyage et dans laquelle les sorties desdits canaux communiquent simultanément avec une ouverture d'évacuation.

Le nettoyage du dispositif peut ainsi être réalisé de manière simple.

L'invention sera bien comprise et ses avantages apparaîtront mieux à la lecture de la description détaillée qui suit, d'un mode de réalisation représenté à titre d'exemple non limitatif. La description se réfère aux dessins annexés sur lesquels :
- la figure 1 est une vue schématique en coupe axiale du dispositif selon l'invention ;
- la figure 2 est une vue en perspective de l'obturateur rotatif de ce dispositif ;
- la figure 3 est une vue de dessous de la figure 2, montrant la face d'extrémité plane de cet obturateur ;
- la figure 4 est une vue en coupe selon la ligne IV-IV de la figure 1, montrant l'obturateur rotatif en position fermée ;
- les figures 5 et 6 sont des vues dans la même coupe que la figure 4, montrant l'obturateur dans ses deux positions de distribution ;
- les figures 7 et 8 sont des vues dans la même coupe, montrant l'obturateur au cours de son retour à sa position de repos à partir de, respectivement, l'une et l'autre de ses positions de distribution ;
- la figure 9 est une coupe schématique selon la ligne IX-IX de la figure 1 ; et
- la figure 10 est une vue en coupe axiale montrant l'obturateur en position de nettoyage

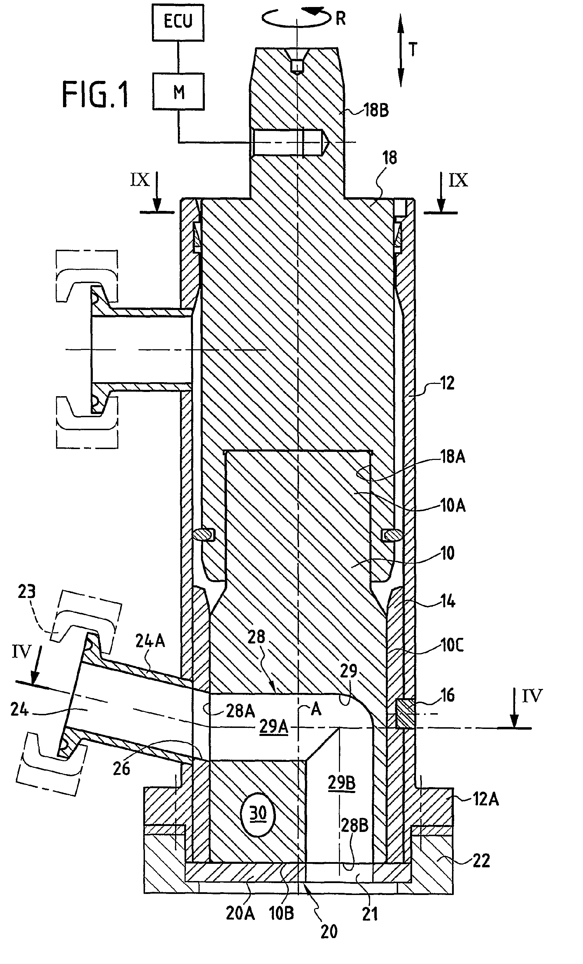

En référence à la figure 1, on voit que le dispositif comprend un obturateur rotatif 10, disposé à l'intérieur d'un corps creux cylindrique 12. Plus précisément, l'obturateur est monté dans un manchon 14 formant un chemisage de la paroi interne cylindrique du corps creux 12 dans la région inférieure de ce dernier. Par exemple, ce manchon 14 est maintenu dans le corps creux 12 à l'aide d'une broche 16 qui traverse un perçage de la paroi du corps creux et pénètre dans un évidement du manchon 14, lequel est en outre avantageusement collé contre la paroi interne du corps creux 12.

Dans l'exemple représenté, l'obturateur 10 est relié à une tige de commande 18, la partie d'extrémité 10A de l'obturateur opposée à sa face d'extrémité plane 10B de distribution étant engagée dans un évidement 18A de l'extrémité inférieure de la tige de commande 18 et solidarisée à cette dernière, par exemple par collage.

Le dispositif comporte encore un élément d'obturation 20 formé par une plaque fixe, par exemple maintenue par rapport au corps creux 12 à l'aide d'une rondelle de support 22, fixée à des pattes d'accrochage 12A du corps creux par tout moyen approprié, par exemple par vissage.

Pour faciliter la distribution du produit en évitant les risques de fuite, l'obturateur 10, le manchon 14 et l'élément d'obturation 20, ou au moins l'une de ces pièces, sont avantageusement réalisés en céramique.

Par tout moyen approprié, la tige de commande 18 peut être reliée à des moyens de commande de son déplacement. En l'espèce, elle présente, à son extrémité opposée à l'extrémité 10B de l'obturateu r, une extension 18B à laquelle peut être attelée la sortie d'un moteur M (l'extension 18B comporte à cet effet un alésage permettant la fixation par vissage). Ce moteur peut être commandé par une unité électronique de commande ECU, programmée en fonction des besoins.

Comme on le verra dans la suite, le moteur est apte à provoquer un déplacement en rotation de la tige 18 et donc de l'obturateur 10 attelé à cette tige comme indiqué par la flèche R. A l'aide d'un vérin (non représenté), l'ensemble constitué par la tige et l'obturateur 10 peut également être déplacé en translation parallèlement à l'axe A de rotation de l'obturateur, comme indiqué par la flèche T, pour permettre le nettoyage. Ce déplacement en translation est par exemple effectué lorsque le moteur est débrayé.

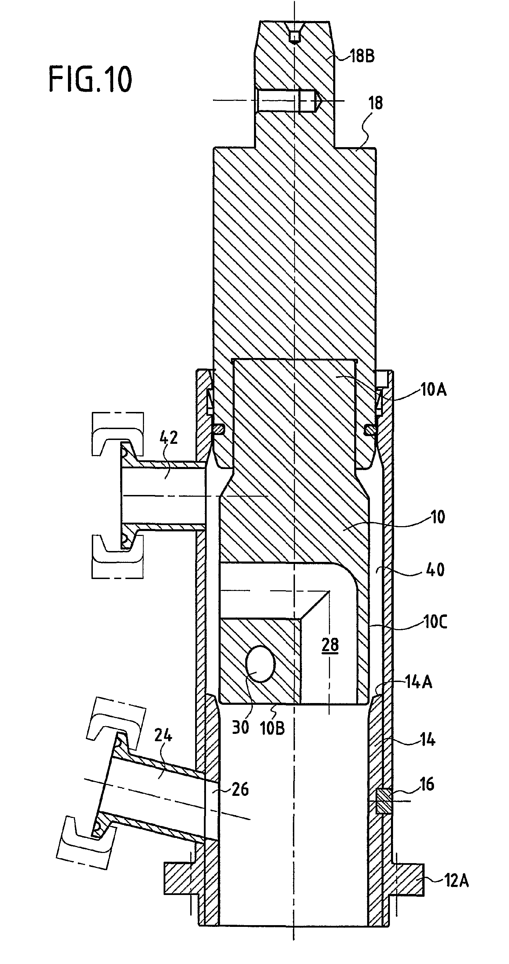

Le déplacement en rotation en va-et-vient permet la distribution du produit par doses successives, tandis que le déplacement en translation permet de placer l'obturateur et la tige de commande 18 en position haute comme indiqué sur la figure 10 pour le nettoyage du dispositif.

Le corps creux 12 comporte une entrée 24 pouvant être raccordée à une alimentation en produits à distribuer, par exemple par un collier de raccordement 23. Cette entrée communique avec un perçage 26 du manchon 14, situé exactement en regard de ladite entrée. De son coté, l'obturateur 10 comporte un premier canal 28 pour le produit à distribuer, qui présente une entrée 28A et une sortie 28B. Sur la figure 1, l'obturateur est dans sa première position de distribution, la sortie 28B du premier canal étant disposée en regard d'un perçage de distribution 21 que comporte l'élément d'obturation 20, tandis que l'entrée 28A dudit canal est disposée en regard de l'entrée 24, en étant plus précisément disposée au droit de l'orifice 26 du corps 14.

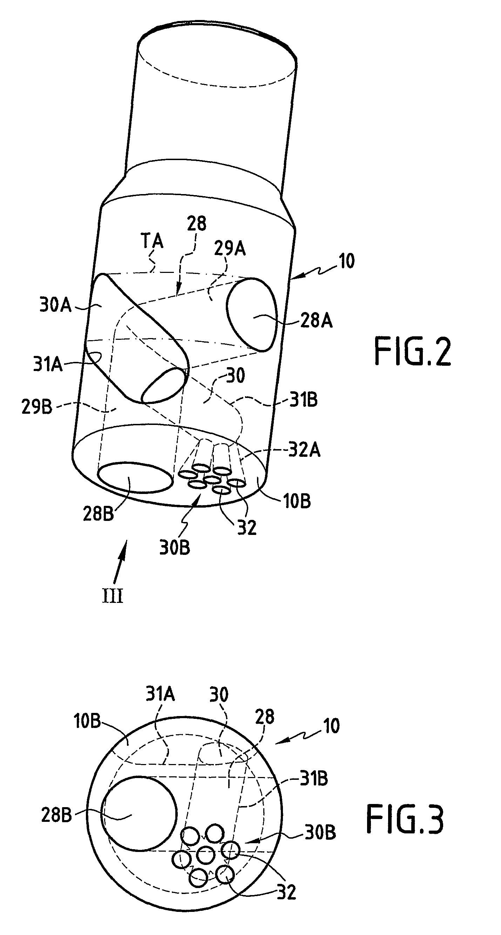

L'obturateur 10 présente un deuxième canal 30 dont on voit mieux la conformation sur la figure 2. On comprend que par une rotation de l'obturateur, l'entrée 30A du deuxième canal 30 peut être située au droit de l'ouverture 26 du manchon 14 et que, dans le même temps, sa sortie 30B peut être située en regard du perçage de distribution 21.

Dans l'exemple représenté, on voit que le premier canal 28 présente un coude 29 et est formé par un premier tronçon 29A, transversal à l'axe A et s'étendant entre l'entrée 28A et ce coude 29, et par un deuxième tronçon 29B qui s'étend axialement jusqu'à la sortie 28B à partir de ce coude 29.

Les entrées 28A et 30A des canaux 28 et 30 s'ouvrent toutes deux dans une face cylindrique 10C de l'obturateur rotatif et leurs sorties 28A et 30A s'ouvrent toutes deux dans la face de distribution 10B. Le canal 30 est toutefois réalisé de manière à ne pas avoir d'intersection avec le canal 28. Pour ce faire, l'entrée 30A du canal 30 est formée dans une gorge 31A pratiquée dans ladite face cylindrique 10C et inclinée pour former une portion d'hélice. A son extrémité supérieure, cette gorge s'ouvre dans la même tranche axiale TA de l'obturateur que l'entrée 28A du canal 28. En d'autres termes, les entrées 30A et 28A des canaux sont situées à la même distance de la face 10B de l'obturateur. A son extrémité inférieure, la gorge 31A est reliée à un tronçon sensiblement transversal 31B du canal 30 qui passe sous le premier tronçon 29A du canal 28 et qui est relié à la sortie 30B du canal 30 par un tronçon terminal de ce canal qui est sensiblement axial. En l'espèce, la sortie 30B du canal 30 comprend une pluralité d'ouvertures de sortie 32 qui sont réparties de manière à former un faisceau. En l'espèce, chaque ouverture de sortie 32 est reliée au tronçon 31B précité par un usinage particulier 32A. Ces usinages 32A forment un faisceau divergent de petits conduits.

Globalement, les ouvertures de sortie 32 qui forment la sortie 30B du canal 30 s'inscrivent dans la même aire que la sortie 28B du canal 28 pour pouvoir, comme cette dernière, être placées en correspondance avec le perçage de distribution 21 de l'élément d'obturation 20.

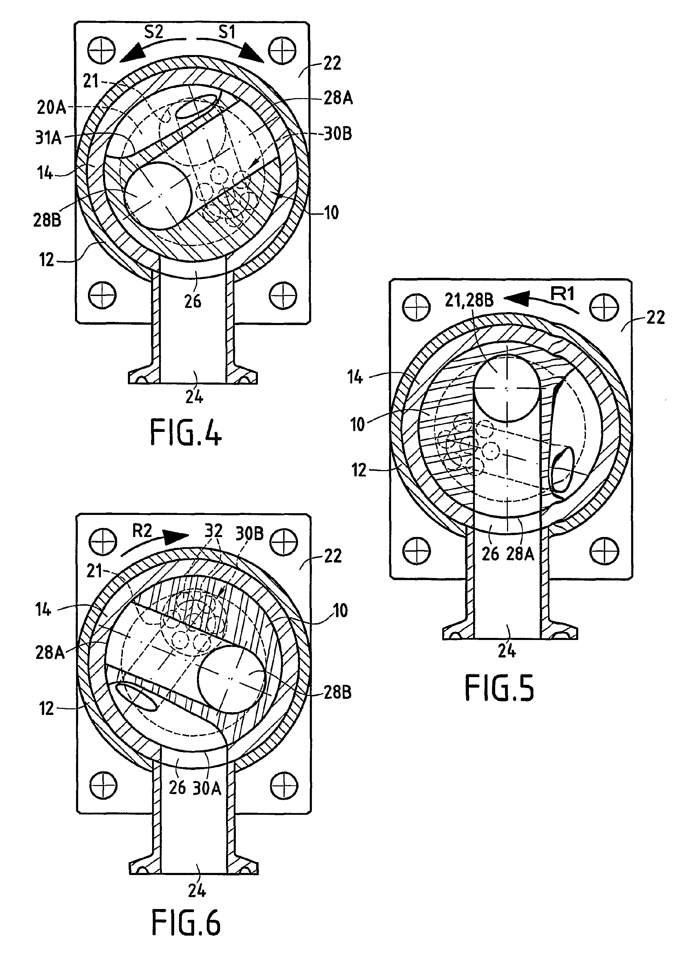

Sur les figures 4 à 8, on a indiqué en traits interrompus la position du perçage de distribution 21, la partie pleine de cet élément formant une zone de masquage 20A.

Sur la figure 4, la position angulaire de l'obturateur rotatif 10 est telle que les sorties 28B et 30B des canaux 28 et 30 se trouvent toutes les deux en regard de la zone de masquage 20A, tandis qu'une partie pleine de la face 10B de l'obturateur est en regard du perçage de distribution 21. Ainsi, les deux canaux ont leurs sorties masquées. De même, les entrées 28A et 30A des canaux sont toutes les deux en regard d'une partie pleine de la paroi cylindrique du manchon 14. Dans cette position angulaire de l'obturateur, cette paroi cylindrique masque donc les entrées et empêche leur alimentation en produit.

Pour parvenir de sa position de la figure 4 à celle de la figure 5, l'obturateur 10 a été tourné dans le sens S1 jusqu'à ce que la sortie 28B du premier canal se trouve en correspondance avec le perçage de distribution 21. Dans la même position angulaire, l'entrée 28A de ce canal se trouve également en regard du perçage 26 de la paroi cylindrique du manchon 14 qui libère donc cette entrée pour permettre son alimentation en produit. Par conséquent, le produit peut être distribué par le premier canal. A partir de la position de la figure 5, pour revenir dans celle de la figure 4, l'obturateur 10 doit être tourné dans le sens R1 opposé au sens S1.

Pour parvenir de sa position de la figure 4 dans celle de la figure 6, l'obturateur 10 doit être pivoté dans une direction S2 qui correspond au sens R1. Sur la figure 6, la sortie 30B du deuxième canal formée par les ouvertures de sortie 32 se trouve en regard du perçage de distribution 21 et l'entrée 30A de ce canal se trouve en regard du perçage 26 de la paroi du manchon 14 qui libère donc cette entrée. Ainsi, le produit peut être distribué par le deuxième canal. Pour revenir ensuite dans sa position de repos illustrée sur la figure 4, l'obturateur doit être tourné dans le sens R2 opposé au sens S2 et correspondant donc au sens S1.

Ainsi, pour distribuer des doses de produit par le premier canal en faisant alternativement passer l'obturateur 10 entre sa position de repos de la figure 4 et sa première position de distribution de la figure 5, ni l'entrée ni la sortie du deuxième canal ne passent à aucun moment devant, respectivement, l'ouverture 26 et le perçage 21.

De même, pour distribuer des doses de produit par le deuxième canal en faisant alternativement passer l'obturateur entre sa position de repos de la figure 4 et sa deuxième position de distribution de la figure 6, ni l'entrée ni la sortie du deuxième canal ne passent devant, respectivement, l'ouverture 26 et le perçage 21.

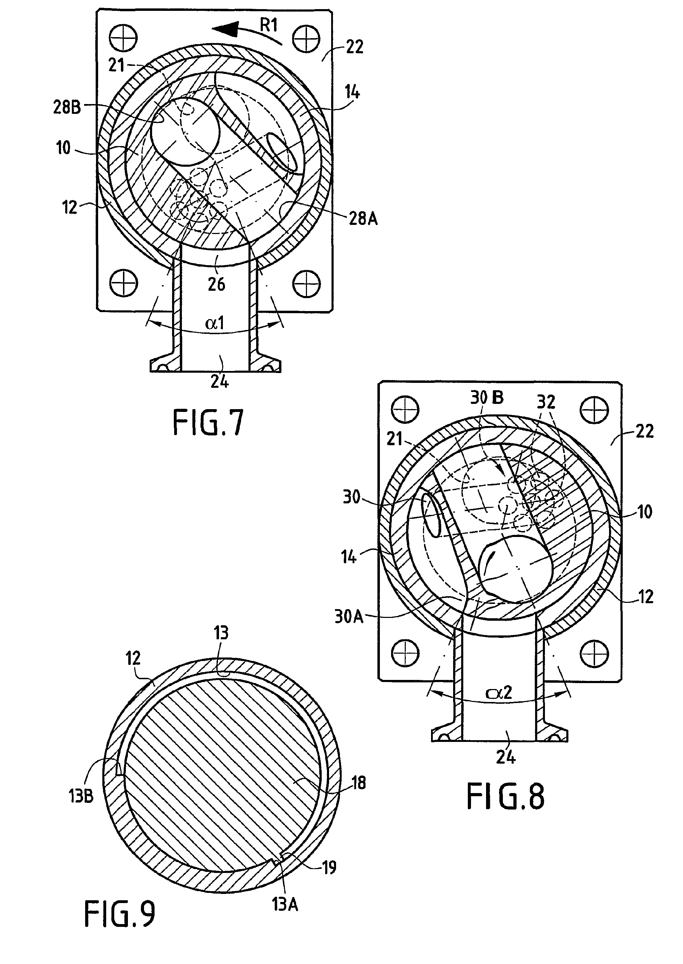

La figure 7 montre la position de l'obturateur 10 au cours de sa rotation, depuis sa première position de distribution de la figure 5 vers sa position de repos de la figure 4. En effet, par rapport à la figure 5, l'obturateur a été tourné dans le sens R1 d'un angle α1. On voit que dans cette situation, la paroi cylindrique du manchon 14 masque l'entrée 28A du canal 28 alors que la sortie 28B de ce canal est encore en partie en correspondance avec le perçage de distribution 21.

De même, la figure 8 montre une position intermédiaire de l'obturateur au cours de son passage de sa position de la figure 6 à celle de la figure 4. L'obturateur a été tourné d'un angle α2 pour lequel l'entrée 30A du deuxième canal 30 est masquée par la paroi du manchon 14 alors que la sortie 30B de ce canal est toujours en partie en correspondance avec le perçage de distribution 21, certains orifices 32 étant encore en regard de ce perçage.

En d'autres termes, au cours d'une rotation de l'obturateur 10 vers sa position de repos à partir de l'une de ses positions de distribution dans laquelle la sortie d'un canal est en en regard du perçage de distribution, la paroi cylindrique du corps creux ou, plus précisément, celle du manchon est apte à masquer l'entrée de ce canal avant que la sortie de ce canal ne soit masquée par la zone de masquage de l'élément d'obturation. Ceci permet, au cours des fermetures successives d'un canal lors de la délivrance, par ce canal, de doses successives de produit, d'éviter la mise en pression de ce canal et le refoulement de produit par l'alimentation 24. La fermeture du canal à sa sortie est donc réalisée alors que ce canal n'est plus en pression notable, et cette fermeture s'opère proprement, sans bavure du produit.

Dans l'exemple représenté, le corps creux ne comporte qu'une seule ouverture 24 à laquelle peut être raccordée l'entrée 28A du canal 28 ou l'entrée 30A du canal 30.

On pourrait toutefois avoir deux ouvertures distinctes spécifiquement dédiées chacune, à l'un des canaux. Par exemple, il suffirait de supprimer la gorge 31A et d'ouvrir directement le tronçon 31B du canal 30 dans la face cylindrique 10B, dans une tranche axiale de l'obturateur située sous la tranche TA. Une ouverture du corps 12 et un orifice du manchon 14 pourraient être ajoutés sous l'ouverture 24 et l'orifice 26 pour pouvoir être reliés à l'entrée de ce canal 30 modifié dans la deuxième position de distribution de l'obturateur. Bien entendu, pour cela, les dimensions axiales de l'obturateur rotatif 10, du corps 12 et du manchon 24 seraient adaptées pour que ces deux ouvertures puissent coexister.

Comme indiqué précédemment, lorsque l'obturateur rotatif est dans sa première position de distribution de la figure 5, il ne peut pas être pivoté davantage dans le sens S1, mais il peut seulement l'être dans le sens R1 de manière à revenir directement dans sa position de repos. De même, lorsque l'obturateur est dans sa deuxième position de distribution de la figure 6, il peut seulement être pivoté dans le sens R2 pour revenir directement dans sa position de repos.

Ainsi, les positions des figures 5 et 6 constituent respectivement les positions limites de déplacement angulaire de l'obturateur 10 dans, respectivement, les sens S1 et S2 à partir de sa position de repos de la figure 4. Pour déterminer ces positions limites, différents moyens peuvent être prévus. En particulier, le moteur M et/ou l'unité électronique de commande ECU peuvent être paramétrés en conséquence. En particulier, l'unité ECU peut n'autoriser la rotation de l'arbre de sortie du moteur que sur une plage angulaire donnée de part et d'autre de sa position neutre dans laquelle l'obturateur est au repos.

On peut également prévoir une limitation mécanique, par exemple par un système de butée. C'est ce qu' illustre la figure 9, sur laquelle la face intérieure du corps creux 12 présente une gorge 13 qui s'étend sur une plage angulaire correspondant à la somme des déplacements maximum dans les sens S1 et S2. La tige de commande 18 présente quant à elle, sur sa face cylindrique, une butée 19 sous la forme d'un ergot qui se déplace dans cette gorge 13. Dans les positions des figures 5 et 6, cet ergot est respectivement situé en butée contre les faces 13A et 13B de la gorge 13.

Sur la figure 10, on a représenté l'obturateur 10 en position de nettoyage. A partir de leur position de travail de la figure 1, l'obturateur 10 et sa tige de commande 18 ont été déplacés vers le haut, c'est-à-dire de manière à s'éloigner de l'élément d'obturation 20 (non représenté sur la figure 9). Dans cette position de nettoyage, on voit que la face cylindrique 10C de l'obturateur se trouve à distance de la paroi du corps creux 12, de sorte que les entrées des canaux 28 et 30 débouchent dans un espace annulaire 40 ménagé entre la face intérieure du corps creux 12 et la face cylindrique 10C de l'obturateur. En d'autres termes, dans la position de nettoyage, les entrées des canaux 28 et 30 sont disposées dans une région du corps creux de section interne accrue.

Comme on le voit sur la figure 10, le manchon 14 forme une surépaisseur sur la paroi intérieure de ce corps creux et, dans la position de nettoyage, les entrées des canaux se trouvent au-dessus de l'extrémité supérieure 14A de ce manchon. Dans cette position, en outre, la face 10B de l'obturateur est éloignée de l'élément d'obturation 20 de sorte que les sorties des canaux 28 et 30 sont également distantes de cet élément d'obturation. Ainsi, le fluide de nettoyage qui est injecté dans le corps creux 12 par l'entrée de nettoyage 42, qui est située dans la région du corps creux de section interne accrue, peut librement circuler autour de la paroi cylindrique 10C de l'obturateur et dans les canaux, et librement sortir à partir de ces canaux par le perçage de distribution 21. On voit également que dans la position de nettoyage de la figure 10, l'extrémité inférieure de l'obturateur est légèrement écartée de la paroi interne du manchon 14 de manière à également permettre la circulation du fluide, directement, de l'espace annulaire 40 vers le perçage de distribution 21 qui constitue donc une ouverture d'évacuation pour le fluide de nettoyage.

## Revendications

1. Dispositif de distribution de produits, en particulier de produits alimentaires, comprenant un obturateur rotatif (10) qui présente un premier canal (28) ayant une entrée (28A) et une sortie (28B) et qui est apte à être déplacé en rotation par rapport à un élément d'obturation (20) pour placer la sortie du premier canal en regard d'un perçage de distribution (21) ou en regard d'une zone de masquage (20A) de l'élément d'obturation,
**caractérisé en ce que** l'obturateur rotatif (10) présente un deuxième canal (30), distinct du premier canal (28) et ayant une entrée (30A) et une sortie (30B), **en ce que** les sorties (28B, 30B) des premier et deuxième canaux (28, 30) sont ménagées dans la même face (10b) de l'obturateur rotatif (10) et espacées l'une de l'autre de telle sorte que l'obturateur rotatif (10) est apte à occuper une position de repos (fig. 4) dans laquelle les sorties des deux canaux sont en regard de la zone de masquage (20A), une première position de distribution (fig. 5) dans laquelle la sortie (28B) du premier canal (28) est en regard du perçage de distribution (21) tandis que la sortie (30B) du deuxième canal (30) est en regard de la zone de masquage (20A) et une deuxième position de distribution (fig. 6) dans laquelle la sortie (30B) du deuxième canal (30) est en regard du perçage de distribution (21) tandis que la sortie (28B) du premier canal (28) est en regard de la zone de masquage (20A), les entrées (20A, 30A) desdits canaux étant aptes à être alimentées en produits à distribuer dans les première et deuxième positions de distribution et **en ce que**, à partir de sa position de repos, l'obturateur rotatif (10) est apte à être commandé dans deux sens de rotation (S1, S2) opposés pour adopter la première ou la deuxième position de distribution, tandis que, à partir de l'une des positions de distribution, l'obturateur rotatif est apte à être commandé seulement dans le sens de sa rotation (R1, R2) vers sa position de repos.

2. Dispositif selon la revendication 1, **caractérisé en ce que** les première et deuxième positions de distribution sont symétriques l'une de l'autre, de part et d'autre de la position de repos.

3. Dispositif selon la revendication 1 ou 2, **caractérisé en ce que** les premier et deuxième canaux (28, 30) présentent des sections de passage de produit à distribuer différentes.

4. Dispositif selon la revendication 3, **caractérisé en ce que** la sortie (30B) du deuxième canal comprend une pluralité d'ouvertures de sortie (32) réparties en faisceau (30).

5. Dispositif selon l'une quelconque des revendications 1 à 4, **caractérisé en ce que** les entrées (28A, 30A) des canaux (28, 30) s'ouvrent dans une face cylindrique (10C) de l'obturateur rotatif (10) et **en ce que** l'obturateur est monté dans un corps creux (12, 14) ayant une paroi cylindrique apte, selon la position de l'obturateur rotatif, à masquer ou à libérer lesdites entrées pour permettre leur alimentation en produit.

6. Dispositif selon la revendication 5, **caractérisé en ce que**, au cours d'une rotation de l'obturateur rotatif (10) vers sa position de repos, à partir de l'une des positions de distribution dans laquelle la sortie (28B, 30B) d'un canal (28, 30) est en regard du perçage de distribution (21), la paroi cylindrique du corps creux (14) est apte à masquer l'entrée dudit canal (28A, 30A) avant que la sortie de ce canal ne soit masquée par la zone de masquage (20A) de l'élément d'obturation (20).

7. Dispositif selon l'une quelconque des revendications 1 à 6, **caractérisé en ce que** les sorties (28B, 30B) des canaux (28, 30) sont situées dans une face d'extrémité (10B) de l'obturateur rotatif (10), perpendiculaire à l'axe de rotation (A) de ce dernier.

8. Dispositif selon l'une quelconque des revendications 1 à 7, **caractérisé en ce que** l'obturateur (10) est apte à occuper, en outre, une position de nettoyage, dans laquelle les entrées (28A, 30A) des canaux (28, 30) communiquent simultanément avec une entrée (42) pour un fluide de nettoyage et dans laquelle les sorties (28B, 30B) desdits canaux communiquent simultanément avec une ouverture d'évacuation (21).

9. Dispositif selon les revendications 5 et 8, **caractérisé en ce que** l'entrée (42) pour le fluide de nettoyage est située dans une région du corps creux (12, 14) de section interne accrue et **en ce que**, à partir des positions de repos et de distribution, l'obturateur rotatif (10) est apte à être déplacé en translation dans ce corps pour adopter la position de nettoyage, dans laquelle les entrées (28A, 30A) des canaux (28, 30) sont disposées dans ladite région de section interne accrue et dans laquelle les sorties (28B, 30B) des canaux (28, 30) sont distantes de l'élément d'obturation (20).

10. Dispositif selon l'une quelconque des revendications 1 à 9, **caractérisé en ce qu'**au moins l'une des pièces constituées par l'obturateur rotatif (10) et l'élément d'obturation (20) est en céramique.

## Patentansprüche

1. Vorrichtung zur Ausgabe von Produkten, insbesondere von Nahrungsmitteln, umfassend einen Drehverschluss (10), der einen ersten Kanal (28) mit einem Eingang (28A) und einem Ausgang (28B) aufweist und der geeignet ist, gegenüber einem Verschlusselement (20) drehend bewegt zu werden, um den Ausgang des ersten Kanals gegenüber einer Ausgabebohrung (21) oder gegenüber einem Abdeckbereich (20A) des Verschlusselements zu platzieren,
**dadurch gekennzeichnet, dass** der Drehverschluss (10) einen zweiten Kanal (30) aufweist, welcher von dem ersten Kanal (28) getrennt ist und einen Eingang (30A) und einen Ausgang (30B) aufweist, dass die Ausgänge (28B, 30B) des ersten und des zweiten Kanals (28, 30) in der gleichen Seite (10b) des Drehverschlusses (10) ausgebildet und derart voneinander beabstandet sind, dass der Drehverschluss (10) geeignet ist, eine Ruhestellung (Fig. 4), in der die Ausgänge der beiden Kanäle dem Abdeckbereich (20A) gegenüberliegen, eine erste Ausgabestellung (Fig. 5), in der der Ausgang (28B) des ersten Kanals (28) der Ausgabebohrung (21) gegenüberliegt, während der Ausgang (30B) des zweiten Kanals (30) dem Abdeckbereich (20A) gegenüberliegt, sowie eine zweite Ausgabestellung (Fig. 6) einzunehmen, in der der Ausgang (30B) des zweiten Kanals (30) der Ausgabebohrung (21) gegenüberliegt, während der Ausgang (28B) des ersten Kanals (28) dem Abdeckbereich (20A) gegenüberliegt, wobei die Eingänge (28A, 30A) der Kanäle geeignet sind, in der ersten und der zweiten Ausgabestellung mit auszugebenden Produkten beaufschlagt zu werden, und dass der Drehverschluss (10) ausgehend von seiner Ruhestellung geeignet ist, in zwei entgegengesetzte Drehrichtungen (S1, S2) betätigt zu werden, um die erste oder die zweite Ausgabestellung einzunehmen, während der Drehverschluss ausgehend von einer der Ausgabestellungen geeignet ist, lediglich in die Richtung seiner Drehung (R1, R2) hin zu seiner Ruhestellung betätigt zu werden.

2. Vorrichtung nach Anspruch 1, **dadurch gekennzeichnet, dass** die erste und die zweite Ausgabestellung auf beiden Seiten der Ruhestellung symmetrisch zueinander sind.

3. Vorrichtung nach Anspruch 1 oder 2, **dadurch gekennzeichnet, dass** der erste und der zweite Kanal (28, 30) unterschiedliche Durchlassquerschnitte für auszugebendes Produkt aufweisen.

4. Vorrichtung nach Anspruch 3, **dadurch gekennzeichnet, dass** der Ausgang (30B) des zweiten Kanals eine Vielzahl von bündelförmig (30) verteilten Auslassöffnungen (32) umfasst.

5. Vorrichtung nach einem der Ansprüche 1 bis 4, **dadurch gekennzeichnet, dass** die Eingänge (28A, 30A) der Kanäle (28, 30) sich in einer Zylinderfläche (10C) des Drehverschlusses (10) öffnen und dass der Verschluss in einem Hohlkörper (12, 14) mit einer zylindrischen Wand angebracht ist, welche entsprechend der Stellung des Drehverschlusses geeignet ist, die Eingänge zu verdecken oder freizugeben, um deren Beaufschlagung mit Produkt zu ermöglichen.

6. Vorrichtung nach Anspruch 5, **dadurch gekennzeichnet, dass** im Laufe einer Drehung des Drehverschlusses (10) in Richtung seiner Ruhestellung, ausgehend von einer der Ausgabestellungen, in der der Ausgang (28B, 30B) eines Kanals (28, 30) der Ausgabebohrung (21) gegenüberliegt, die zylindrische Wand des Hohlkörpers (14) geeignet ist, den Eingang des Kanals (28A, 30A) zu verdecken, bevor der Ausgang dieses Kanals durch den Abdeckbereich (20A) des Verschlusselements (20) verdeckt wird.

7. Vorrichtung nach einem der Ansprüche 1 bis 6, **dadurch gekennzeichnet, dass** die Ausgänge (28B, 30B) der Kanäle (28, 30) in einer Endseite (10B) des Drehverschlusses (10), die senkrecht zu der Rotationsachse (A) von letzterem verläuft, gelegen sind.

8. Vorrichtung nach einem der Ansprüche 1 bis 7, **dadurch gekennzeichnet, dass** der Verschluss (10) geeignet ist, ferner eine Reinigungsstellung einzunehmen, in der die Eingänge (28A, 30A) der Kanäle (28, 30) gleichzeitig mit einem Eingang (42) für ein Reinigungsfluid in Verbindung stehen und in der die Ausgänge (28B, 30B) der Kanäle gleichzeitig mit einer Abführöffnung (21) in Verbindung stehen.

9. Vorrichtung nach den Ansprüchen 5 und 8, **dadurch gekennzeichnet, dass** der Eingang (42) für das Reinigungsfluid in einem Bereich des Hohlkörpers (12, 14) mit vergrößertem Innenquerschnitt gelegen ist und dass der Drehverschluss (10) ausgehend von den Ruhe- und Ausgabestellungen geeignet ist, in diesem Körper verschiebebewegt zu werden, um die Reinigungsstellung einzunehmen, in der die Eingänge (28A, 30A) der Kanäle (28, 30) in dem Bereich mit vergrößertem Innenquerschnitt angeordnet sind und in der die Ausgänge (28B, 30B) der Kanäle (28, 30) von dem Verschlusselement (20) beabstandet sind.

10. Vorrichtung nach einem der Ansprüche 1 bis 9, **dadurch gekennzeichnet, dass** wenigstens eines der durch den Drehverschluss (10) und das Verschlusselement (20) gebildeten Teile aus Keramik besteht.

## Claims

1. Device for dispensing products, in particular food products, comprising a rotary shutter (10), which has a first duct (28) having an input (28A) and an output (28B) and which is capable of being moved rotationally with respect to a shuttering element (20) in order to position the output of the first duct facing a dispensing hole (21) or facing a masking area (20A) of the shuttering element,
**characterised in that** the rotary shutter (10) has a second duct (30), separate from the first duct (28) and having an input (30A) and an output (30B), and **in that** the outputs (28B, 30B) of the first and second ducts (28, 30) are arranged in the same face (10b) of the rotary shutter (10) and spaced apart from one another so that the rotary shutter (10) is capable of occupying a rest position (Fig. 4) in which the outputs of the two ducts face the masking area (20A), a first dispensing position (Fig. 5) in which the output (28B) of the first duct (28) faces the dispensing hole (21) whilst the output (30B) of the second duct (30) faces the masking area (20A) and a second dispensing position (Fig. 6) in which the output (30B) of the second duct (30) faces the dispensing hole (21) whilst the output (28B) of the first duct (28) faces the masking area (20A), the inputs (20A, 30A) of said ducts being capable of being supplied with products to be dispensed in the first and second dispensing positions, and **in that**, from its rest position, the rotary shutter (10) is capable of being controlled in two opposite directions of rotation (S1, S2) in order to adopt the first or the second dispensing position, whereas, from one of the dispensing positions, the rotary shutter is capable of being controlled solely in the direction of its rotation (R1, R2) towards its rest position.

2. Device according to Claim 1, **characterised in that** the first and second dispensing positions are symmetrical with one another, on either side of the rest position.

3. Device according to Claim 1 or 2, **characterised in that** the first and second ducts (28, 30) have different flow cross-sections for product to be dispensed.

4. Device according to Claim 3, **characterised in that** the output (30B) of the second duct comprises a plurality of output openings (32) distributed in a cluster (30).

5. Device according to any one of Claims 1 to 4, **characterised in that** the inputs (28A, 30A) of the ducts (28, 30) open into a cylindrical face (10C) of the rotary shutter (10) and **in that** the shutter is mounted in a hollow body (12, 14) having a cylindrical wall capable, depending on the position of the rotary shutter, of masking or freeing said inputs in order to allow them to be supplied with product.

6. Device according to Claim 5, **characterised in that**, during a rotation of the rotary shutter (10) towards its rest position, from one of the dispensing positions in which the output (28B, 30B) of a duct (28, 30) is opposite the dispensing hole (21), the cylindrical wall of the hollow body (14) is capable of masking the input of said duct (28A, 30A) before the output of this duct is masked by the masking area (20A) of the shuttering element (20).

7. Device according to any one of Claims 1 to 6, **characterised in that** the outputs (28B, 30B) of the ducts (28, 30) are situated in an end face (10B) of the rotary shutter (10), perpendicular to the axis of rotation (A) of the latter.

8. Device according to any one of Claims 1 to 7, **characterised in that** the shutter (10) is also capable of occupying a cleaning position, in which the inputs (28A, 30A) of the ducts (28, 30) communicate simultaneously with an input (42) for a cleaning fluid and in which the outputs (28B, 30B) of said ducts communicate simultaneously with a drainage opening (21).

9. Device according to Claims 5 and 8, **characterised in that** the input (42) for the cleaning fluid is situated in a region of the hollow body (12, 14) with increased internal cross-section and **in that**, from the rest and dispensing positions, the rotary shutter (10) is capable of being moved translationally in this body in order to adopt the cleaning position, in which the inputs (28A, 30A) of the ducts (28, 30) are disposed in said region with increased internal cross-section and in which the outputs (28B, 30B) of the ducts (28, 30) are at a distance from the shuttering element (20).

10. Device according to any one of Claims 1 to 9, **characterised in that** at least one of the components constituted by the rotary shutter (10) and the shuttering element (20) is made of ceramic.
